# EUROPÄISCHE PATENTSCHRIFT

(11) **EP 3 656 165 B1**
(45) Veröffentlichungstag und Bekanntmachung des Hinweises auf die Patenterteilung: **24.04.2024**
(21) Anmeldenummer: 18730752.5
(22) Anmeldetag: 11.06.2018
(51) Int. Cl.: H04W 76/14, H04W 16/14, H04W 4/46, H04W 72/541, H04W 84/18

(54) **VERFAHREN ZUM BETREIBEN EINER NETZWERKINFRASTRUKTURSEITIGEN NETZWERKEINHEIT, EINE NETZWERKINFRASTRUKTURSEITIGE NETZWERKEINHEIT, EIN VERFAHREN ZUM BETREIBEN EINER STRASSENSEITIGEN NETZWERKEINHEIT UND EINE STRASSENSEITIGE NETZWERKEINHEIT**
METHOD FOR OPERATING A NETWORK INFRASTRUCTURE-SIDE NETWORK UNIT, A NETWORK INFRASTRUCTURE-SIDE NETWORK UNIT, A METHOD FOR OPERATING A ROADSIDE NETWORK UNIT AND A ROADSIDE NETWORK UNIT
PROCÉDÉ DE FONCTIONNEMENT D'UNE UNITÉ DE RÉSEAU CÔTÉ INFRASTRUCTURE DE RÉSEAU, UNITÉ DE RÉSEAU CÔTÉ INFRASTRUCTURE DE RÉSEAU, PROCÉDÉ DE FONCTIONNEMENT D'UNE UNITÉ DE RÉSEAU CÔTÉ ROUTE ET UNITÉ DE RÉSEAU CÔTÉ ROUTE

(30) Priorität: 18.07.2017 DE 102017212242; 13.10.2017 DE 102017218317
(43) Veröffentlichungstag der Anmeldung: 27.05.2020
(73) Patentinhaber: Robert Bosch GmbH, 70442 Stuttgart (DE)
(72) Erfinder: HAAS, Christine, 71634 Ludwigsburg (DE); DUENGEN, Monique, 30451 Hannover (DE); BRAHMI, Nadia, 31139 Hildesheim (DE); ECKERT, Kurt, 71254 Ditzingen (DE); KERMOAL, Jean-Philippe, 70839 Gerlingen (DE); SVEJKOVSKY, Peter, 71272 Renningen (DE); HOFMANN, Frank, 31139 Hildesheim (DE); THEIN, Christoph, 31139 Hildesheim (DE)
(86) Internationale Anmeldenummer: PCT/EP2018/065274
(87) Internationale Veröffentlichungsnummer: WO 2019/015868

(56) Entgegenhaltungen:
- US-A1- 2017 188 391
- INTEL CORPORATION: "LTE-V2V coexistence with DSRC technology", 3GPP DRAFT; R1-1611924 INTEL - V2V DSRC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , Bd. RAN WG1, Nr. Reno, USA; 20161114 - 20161118 6. November 2016 (2016-11-06), XP051190736, Gefunden im Internet: URL:http://www.3gpp.org/ftp/tsg_ran/WG1_RL 1/TSGR1_87/Docs/ [gefunden am 2016-11-06]

## Beschreibung

### Stand der Technik

Die Erfindung betrifft ein Verfahren zum Betreiben einer netzwerkinfrastrukturseitigen Netzwerkeinheit, eine netzwerkinfrastrukturseitige Netzwerkeinheit, ein Verfahren zum Betreiben einer straßenseitigen Netzwerkeinheit und eine straßenseitige Netzwerkeinheit.

Es ist bekannt, dass bereits heute Fahrzeuge in der Lage sind, Informationen mit anderen Fahrzeugen in deren Nähe (V2V: Vehicle to Vehicle) auszutauschen. Auch können Fahrzeuge mit straßenseitiger Infrastruktur drahtlos kommunizieren (V2I: Vehicle to Infrastructure). Ebenso kann das Fahrzeug mit einem Backend-Server im Internet (V2N: Vehicle to Network) oder mit einem Fußgänger-Endgerät (V2P: Vehicle to Person) drahtlos kommunizieren. Diese Kommunikation wird insgesamt auch als Vehicle-to-Everything (V2X) bezeichnet. Die Entwicklung neuer Funktionen und Dienstleistungen in der Automobilindustrie wie beispielsweise automatisiertes Fahren profitiert von V2X. Verkehrssicherheit, Fahrkomfort und Energieeffizienz können verbessert werden. Dies führt zu neuen Produkten und Geschäftsmodellen für Autohersteller, Automobilzulieferer und andere Dienstleister.

Die erste Generation der V2X-Anwendungen, die in den kommenden Jahren eingesetzt werden soll, ist hauptsächlich auf die Anwendung auf der Straße bezogen. Ihr Ziel ist es, dem Fahrer Informationen über das Straßenumfeld bereitszustellen. Fahrzeuge stellen periodisch Statusinformationen (z. B. Position, Geschwindigkeit, Beschleunigung usw.) und/oder Ereignisinformation (Rettungseinsatz, liegen gebliebenes Fahrzeug, Stau) bereit. Diese Informationen werden in der Regel in Form von Kurzmitteilungen lokal abgesetzt. Von benachbarten Fahrzeugen kann diese ereignisbasierte Information an eine zentrale Netzwerkeinheit (Basisstation, Backend) geschickt werden.

Für V2X Direct Device-to-Device (D2D) Kommunikation gibt es derzeit zwei konkurrierende Technologien. Die erste Technologie basiert funktechnisch auf dem IEEE802.11p Standard, welcher die Basis für die übergreifenden Standards DSRC (Dedicated Short Range Communication) in den USA und ETSI ITS G5 (ETSI: European Telecommunications Standards Institute; ITS: Intelligent Transport Systems) in Europa bildet. Die zweite Technologie basiert auf 3GPP (3rd Generation Partnership Project) LTE (Long Term Evolution) und ist auch unter dem Kürzel LTE-V2X bekannt. Eine Weiterentwicklung der LTE-V2X-Technologie wird mit 5G (5th generation mobile networks) erwartet.

Der IEEE 802.11p-Standard verwendet die PHY-Schicht des IEEE 802.11a-Standards auf der Grundlage von Orthogonal Frequency Division Multiplexing (OFDM) mit einigen Modifikationen. Die MAC-Schicht basiert auf dem Enhanced Distributed Channel Access (EDCA), welcher konkurrenzbasiert ist. Des Weiteren wird Carrier Sense Multiple Access (CSMA) mit Collision Avoidance (CSMA / CA) verwendet. CSMA / CA folgt dem Listen-Before-Talk-Prinzip, um Kollisionen auf dem Kanal zu minimieren. Wenn eine Netzwerkeinheit (in diesem Zusammenhang ein Fahrzeug) Daten zu übermitteln hat, führt diese eine Kanalmessung durch, um zu überprüfen, ob der Kanal besetzt ist. Wenn der Kanal als leer wahrgenommen wird, wartet die Netzwerkeinheit mit der geplanten Übertragung eine zufallsermittelte Zeit ab und beginnt dann mit der Übertragung. Wenn der Kanal während der Kanalmessung belegt ist, so wird die Netzwerkeinheit eine Backoff-Prozedur durchführen, d. h. sie wartet mit dem nächsten Kanalzugriff eine zufallsermittelte Zeitperiode ab. Je höher die Anzahl der Netzwerkeinheiten ist, die in einem geografischen Gebiet senden, desto höher ist die Wahrscheinlichkeit, dass eine Netzwerkeinheit ihre Übertragung verzögert, was zu insgesamt erhöhten Verzögerungen im Netzwerk führt. Der IEEE 802.11p-Standard bietet gegenüber anderen WLAN-Standards auf Basis von IEEE 802.11 Vorteile in Bezug auf Latenz und Signalisierungsaufwand und ist auf den Anwendungsfall V2V angepasst.

Die LTE-Erweiterung für V2X ab dem 3GPP Release 14 schlägt vor, ein lizenziertes und/oder ein nicht lizenziertes Spektrum für die Kommunikation zu nutzen. Die V2V-Kommunikation basiert auf einer direkten Device-to-Device-Schnittstelle (auch als Sidelink-Schnittstelle an der physikalischen Schicht bezeichnet). Im Gegensatz zu 802.11p geschieht die Übertragung zellgestützt, d. h. durch das Netzwerk geplant durchführt. Übertragungsrechte werden von einer Scheduler-Einheit, die sich in der Basisstation befindet, erteilt, sodass Kollisionen vermieden und Störungen minimiert werden. Die Kontrolle durch die Basisstation kann nur in Bereichen durchgeführt werden, in denen das Basisstationsignal verfügbar ist (in-coverage). In einem Fall, in dem kein Basisstationssignal zur Verfügung steht (out-of-coverage), findet die Kommunikation mit vordefinierten Parametern über den Sidlink statt.

Die 5G Automotive Association (5GAA) möchte das 5,9 GHz ITS-Frequenzspektrum, auf dem auch die ITS-G5-Systeme arbeiten, verwenden. Dies stellt eine Bedrohung für die Zukunft der ITS-G5-Systeme und deren Einsatz dar, da einige Automobilhersteller ihre Pläne bereits angekündigt haben, ITS-G5-basierte Systeme in ihrem Autos zu verbauen. Damit würden zwei unterschiedliche Drahtloskommunikationssysteme im gleichen nicht lizenzierten Frequenzbereich senden und es ergäben sich Leistungsverschlechterungen für beide Technologien.

US 2017/0188391 A1 offenbart ein Erfassungsverfahren für ein erstes Fahrzeugbenutzergerät (UE) zur Kollisionsvermeidung in einem drahtlosen Kommunikationsnetz. Das Verfahren umfasst das Empfangen eines Satzes von Scheduling Assignment-Informationen, die einem Satz von zweiten Fahrzeug-UEs zugeordnet sind, das Decodieren des Satzes von SA-Informationen, von denen jede SA-Informationen für jedes des Satzes von zweiten Fahrzeug-UEs enthält, das Durchführen eines Energieerfassungsvorgangs für Ressourcen, die von jedem des Satzes von zweiten Fahrzeug-UEs verwendet werden sollen, um eine zusätzliche potenzielle SA-Übertragung und Datenübertragung aus dem Satz von zweiten Fahrzeug-UEs über die Ressourcen zu bestimmen, Bestimmen der verfügbaren Ressourcen für die Datenübertragung vom ersten Fahrzeug-UE auf der Grundlage der durchgeführten Energieerfassung und SA-Erfassung, Überspringen eines Kanalerfassungsvorgangs an mindestens einem Hilfsrahmen, der für die Datenübertragung vom ersten Fahrzeug-UE verwendet wird, und Übertragen von Daten zwischen Ressourcen, die bei den nächsten Übertragungen vom zweiten Fahrzeug-UE als unbenutzt identifiziert werden.

### INTEL CORPORATION: "LTE-V2V

coexistence with DSRC technology", 3GPP DRAFT; R1-1611924 INTEL - V2V DSRC, 3RD GENERATION PARTNERSHIP PROJECT (3GPP), offenbart Ansätze zur Koexistenz von LTE-V2V und DSRC.

Mithin könnte man eine objektive technische Aufgabe dahingehend formulieren, als dass ein Koexistenzmechanismus für die zwei unterschiedliche Drahtloskommunikationstechnologien zu schaffen ist, um vorhandene Ressourcen fair aufzuteilen.

### Offenbarung der Erfindung

Das der Erfindung zugrunde liegende Problem wird durch ein Verfahren zum Betreiben einer netzwerkinfrastrukturseitigen Netzwerkeinheit nach dem Anspruch 1, eine netzwerkinfrastrukturseitige Netzwerkeinheit nach einem nebengeordneten Anspruch, ein Verfahren zum Betreiben einer straßenseitigen Netzwerkeinheit nach einem nebengeordneten Anspruch und eine straßenseitige Netzwerkeinheit nach einem nebengeordneten Anspruch gelöst.

Gemäß einem ersten und zweiten Aspekt wird ein Verfahren zum Betreiben einer netzwerkinfrastrukturseitigen Netzwerkeinheit sowie eine netzwerkinfrastrukturseitige Netzwerkeinheit vorgeschlagen. Eine Gültigkeitsdauer für eine zell-bezogenen Belegungsinformation wird in Abhängigkeit von einer vorab bestimmten oder ermittelten mittleren Bewegungsgeschwindigkeit der in der Zelle befindlichen straßenseitigen Netzwerkeinheiten ermittelt. die für die Gültigkeitszeidauer gültige zell-bezogene Belegungsinformation von Sidelink-Ressourcen eines Sidelink-Kanals in einem nicht lizenzierten Frequenzbereich wird prognostiziert, wobei die Belegungsinformation eine wahrscheinliche Belegung der Sidelink-Ressourcen durch Nicht-Sidelink-Kommunikation in dem nicht lizenzierten Frequenzbereich umfasst. Eine Scheduling-Request-Nachricht für den Sidelink-Kanal wird auf einem Uplink-Kanal von einer straßenseitigen Netzwerkeinheit empfangen. Eine Scheduling-Grant-Nachricht für die straßenseitige Netzwerkeinheit wird in Abhängigkeit von der gültigen prognostizierten zell-bezogenen Belegungsinformation ermittelt, wobei die Scheduling-Grant-Nachricht eine Zuweisung zumindest einer Sidelink-Ressource des Sidelink-Kanals zu der straßenseitigen Netzwerkeinheit umfasst. Die Scheduling-Grant-Nachricht wird auf einem Downlink-Kanal an die straßenseitige Netzwerkeinheit versendet.

Aufgrund der prognostizierten zell-bezogenen Belegungsinformation werden potentiell belegte Sidelink-Ressourcen identifiziert, die potentiell Nicht-Sidelink-Netzwerkverkehr, der nicht zentral gescheduled ist, enthalten. Werden die potentiell freien Sidelink-Ressourcen gescheduled, so wird eine Kollisionswahrscheinlichkeit dieser geschedulten Sidelink-Ressourcen auf dem Sidelink-Kanal mit Nicht-Sidelink-Netzwerkverkehr verringert. Mithin profitieren sowohl das zell-basierte Drahtlosnetzwerk als auch ein zweites Drahtlosnetzwerk, welche sich den nicht lizenzierten Frequenzbereich teilen. Die Datenrate und die Zuverlässigkeit beider Drahtlosnetzwerke erhöht sich.

Gemäß einem dritten und vierten Aspekt wird ein Verfahren zum Betreiben einer straßenseitigen Netzwerkeinheit sowie eine straßenseitige Netzwerkeinheit vorgeschlagen. Eine Messung eines Sidelink-Kanals wird durchgeführt. Eine in der Vergangenheit liegende lokale Belegungsinformation wird in Abhängigkeit von der Messung des Sidelink-Kanals ermittelt. Die lokale Belegungsinformation des Sidelink-Kanals wird auf dem Uplink-Kanal an die netzwerkinfrastrukturseitige Netzwerkeinheit versendet.

Durch die Ermittlung der lokalen Belegungsinformation auf der Seite der straßenseitigen Netzwerkeinheit wird vorteilhaft erreicht, dass die Belegung des Sidelink-Kanals durch andere als Sidelink-fähige Netzwerkeinheiten in einem Empfangsbereich der straßenseitigen Netzwerkeinheit, also einem ortsbezogenen Bereich, ermittelt wird. Die übermittelten lokalen Belegungsinformationen bieten den Vorteil, dass beim Scheduling durch die netzwerkinfrastrukturseitige Netzwerkeinheit auch Netzwerkverkehr von Nicht-Sidelink-fähigen Netzwerkeinheiten, deren Sendeleistung nicht ausreicht, um bei der netzwerkinfrastrukturseitigen Netzwerkeinheit ermittelt zu werden, berücksichtigt wird. Diese Berücksichtigung erlaubt eine feinere Granularität der Scheduling-Entscheidungen, um in der Zelle nachteilhafte gegenseitige Beeinflussungen zweier in dem gleichen nicht lizenzierten Frequenzbereich operierender Drahtlosnetzwerke zu reduzieren.

Weitere Merkmale und Vorteile finden sich in der nachfolgenden Beschreibung von Ausführungsbeispielen. In der Zeichnung zeigen:
- Figur 1: ein erstes Zell-basiertes Drahtloskommunikationsnetzwerk und ein zweites Drahtloskommunikationsnetzwerk;
- Figuren 2 und 3: jeweils ein schematisches Ablaufdiagramm;
- Figuren 4, 5, 7 und 9: jeweils ein schematisches Sequenzdiagramm; und
- Figuren 6 und 8: jeweils eine schematische Darstellung zur Ermittlung einer zell-bezogenen Belegungsinformation.

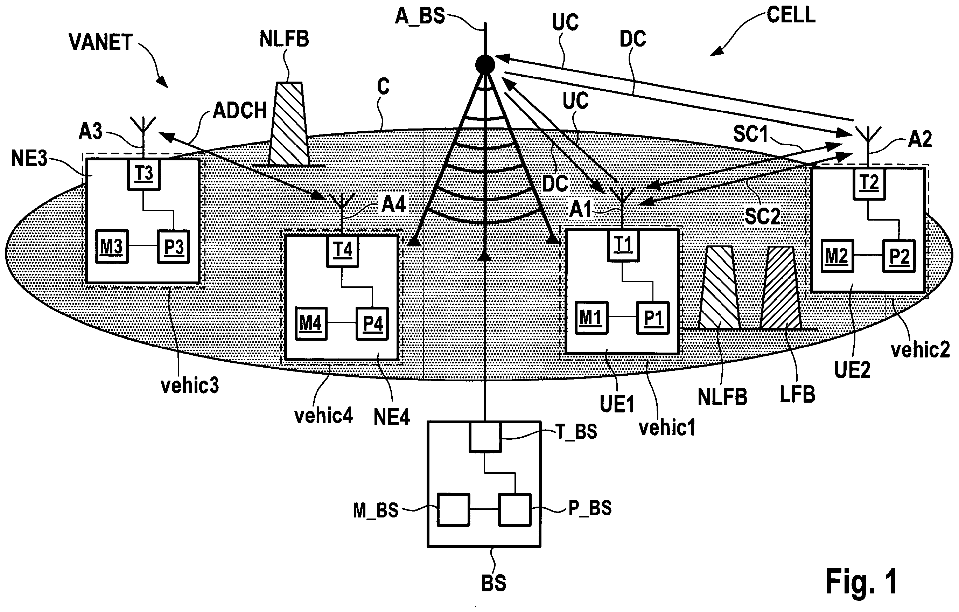

Figur 1 zeigt ein erstes zell-basiertes Drahtloskommunikationsnetzwerk CELL und ein zweites Drahtloskommunikationsnetzwerk VANET. Das erste Drahtloskommunikationsnetzwerk CELL umfasst eine netzwerkinfrastrukturseitige Netzwerkeinheit BS, eine erste straßenseitige Netzwerkeinheit UE1 und eine zweite staßenseitige Netzwerkeinheit UE2. Die netzwerkinfrastrukturseitige Netzwerkeinheit BS umfasst einen Prozessor P_BS, ein Speicherelement M_BS, und einen Transceiver T_BS. Die netzwerkinfrastrukturseitige Netzwerkeinheit BS ist auch als Basisstation oder eNodeB bezeichenbar. Die netzwerkinfrastrukturseitige Netzwerkeinheit BS ist mit einer stationären Antenne A_BS verbunden, um Daten auf einem Downlink-Kanal DC zu senden und Daten auf einem Uplink-Kanal UC zu empfangen. Die Antenne A_BS umfasst beispielsweise eine Anzahl von Antennen und ist beispielsweise als Remote Radio Head, RRH, ausgeführt. Die netzwerkinfrastrukturseitige Netzwerkeinheit BS und die Antenne A_BS stellen eine Zelle C bereit, innerhalb derer die straßenseitigen Netzwerkeinheiten UE1 und UE2 mit der Netzwerkeinheit BS kommunizieren. Selbstverständlich kann die netzwerkinfrastrukturseitige Netzwerkeinheit BS im Rahmen einer Virtualisierung auch verteilt aufgebaut sein und aus vereinzelten Netzwerkeinheiten bestehen.

Die Netzwerkeinheiten BS. UE1 und UE2 sind beispielsweise nach dem LTE-V2X Standard konfiguriert.

Die straßenseitigen Netzwerkeinheiten UE1 und UE2 umfassen jeweils einen Prozessor P1, P2, ein Speicherlement M1, M2, einen Transceiver T1, T2 und eine Antenne A1, A2. Die beiden straßenseitigen Netzwerkeinheiten UE1, UE2 befinden sich innerhalb der Zelle C, empfangenen Daten auf dem Downlink-Kanal DC und versenden Daten auf dem Uplink-Kanal UC. Die beiden straßenseitigen Netzwerkeinheiten UE1, UE2 können direkt miteinander über einen ersten Sidelink-Kanal SC1 in einem nicht-lizenzierten Frequenzbereich NLFB und über einen zweiten Sidelink-Kanal SC2 in einem lizenzierten Frequenzbereich LFB kommunizieren.

Die beiden straßenseitigen Netzwerkeinheiten UE1, UE2 befinden sich innerhalb der Zelle C, und sind fähig, Daten auf dem Downlink-Kanal DC zu empfangen und Daten auf dem Uplink-Kanal UC zu versenden. Die beiden straßenseitigen Netzwerkeinheiten UE1, UE2 sind fähig direkt miteinander über einen Sidelink-Kanal SC1 in einem nicht-lizenzierten Frequenzbereich NLFB und über einen Sidelink-Kanal SC2 in einem lizenzierten Frequenzbereich LFB zu kommunizieren.

Nationale Behörden wie beispielsweise die Bundesnetzagentur der Bundesrepublik Deutschland erstellen einen Frequenznutzungsplan, welcher beispielsweise Lizenzen für einen jeweiligen Netzbetreiber umfasst. Dem Netzbetreiber ist es im Rahmen der zugewiesenen Lizenz erlaubt, die Netzwerkinfrastruktur sowie Endgeräte in einem zugewiesenen, d.h. lizenzierten Frequenzbereich bzw. Frequenzspektrum zu nutzen. Im Gegensatz dazu gibt es Frequenzbereiche bzw. Frequenzspektren, welche keinem Netzbetreiber zugewiesen sind und unter gewissen Randbedingungen wie beispielsweise reduzierter sende-/Empfangsleistung frei nutzbar sind.

In dieser Beschreibung wird auf einen einzigen Uplink-Kanal und einen einzigen Downlink-Kanal Bezug genommen. Beispielsweise umfasst der Uplink-Kanal und der Downlink-Kanal jeweilige Unterkanäle, d.h. es können mehrere Kanäle im Uplink als auch im Downlink Verwendung finden. Gleiches gilt für die Sidelink-Kanäle SC1, SC2.

Das zweite Drahtloskommunikationsnetzwerk VANET umfasst zwei weitere straßenseitige Netzwerkeinheiten NE3 und NE4, welche jeweils einen Prozessor P3, P4, ein Speicherlement M3, M4, einen Transceiver T3, T4 und eine Antenne A3, A4 umfassen. Die Netzwerkeinheiten NE3 und NE4 sind beispielsweise nach dem Standard IEEE 802.11p konfiguriert. Die Netzwerkeinheiten NE3 und NE4 kommunizieren direkt miteinander über einen Adhoc-Kanal ADCH in dem nicht lizenzierten Frequenzbereich NLFB. Der Adhoc-Kanal ADCH wird über ein CSMA/CA-Protokoll (CSMA/CA: Carrier Sense Multiple Access/Collision Avoidance) von den Transceivern T3, T4 arbitriert.

Auf den Speicherelementen M1, M2, M3, M4 sind jeweilige Computerprogramme abgespeichert, die bei Ausführung auf dem jeweiligen Prozessor P1, P2, P3, P4 die in dieser Beschreibung offenbarten Verfahren realisieren. Alternativ sind die Prozessoren P1, P2, P3, P4 als ASIC realisiert.

Die dritte und vierte Netzwerkeinheit NE3 und NE4 befinden sich in der Nähe der beiden ersten und zweiten Netzwerkeinheiten UE1 und UE2 insbesondere innerhalb eines Bereichs der Zelle C, so dass die jeweilige Sendeleistung ausreicht, um eine Übertragung der Netzwerkeinheiten UE1 und UE2 in dem nicht lizenzierten Frequenzbereich NLFB zu stören. Mithin können sich Übertragungen auf den Kanälen ADCH und SC1 gegenseitig nachteilhaft beeinflussen. Ziel dieser Beschreibung ist es, diese gegenseitige nachteilhafte Beeinflussung zu reduzieren.

Die Sidelink-Kanäle SC1 und SC2 werden in einem sogenannten managed mode betrieben, was bedeutet, dass die Netzwerkeinheit BS die Übertragung auf den Sidelink-Kanälen SC1 und SC2 über entsprechende Nachrichten im Downlink-Kanal DC kontrolliert. Der Adhoc-Kanal ADCH wird hingegen nicht in einem managed mode betrieben. Die straßenseitigen Netzwerkeinheiten NE3, NE4 greifen also selbstständig auf den Adhoc-Kanal ADCH zu.

Die straßenseitigen Netzwerkeinheiten UE1, UE2, NE3 und NE4 sind in jeweiligen Kraftfahrzeugen vehic1, vehic2, vehic3, vehic4 angeordnet und mit einem jeweils dort angeordneten nicht gezeigten Steuergerät zum Datenaustausch verbunden. Alternativ sind die straßenseitigen Netzwerkeinheiten UE1, UE2, NE3 und NE4 Teil des Steuergeräts in dem jeweiligen Kraftfahrzeug vehic1, vehic2, vehic3, vehic4. In einer weiteren alternativen Ausführungsform sind die straßenseitigen Netzwerkeinheiten UE1, UE2, NE3 und NE4 anstatt in einem Kraftfahrzeug in einer feststehenden Infrastruktur wie beispielsweise einer Ampel angeordnet.

Die Sidelink-Kanäle SC1, SC2 und ein Sidelink im allgemeinen sind beispielsweise durch das Dokument 3GPP TS 36.300 V14.2.0 (2017-03) definiert, welches durch Bezugnahme in diese Beschreibung aufgenommen ist. Der Sidelink umfasst Sidelink Discovery, Sidelink-Kommunikation und V2X-Sidelink-Kommunikation zwischen den Netzwerkeinheiten UE1, UE2. Der Sidelink verwendet Uplink-Ressourcen und eine physikalische Kanalstruktur ähnlich wie die des Uplinks. Der Sidelink unterscheidet sich also vom Uplink in Bezug auf den physikalischen Kanal.

Der Sidelink ist auf einzelne Clusterübertragungen für die physikalischen Sidelink-Kanäle begrenzt. Weiterhin verwendet der Sidelink eine 1-Symbol-Lücke am Ende jedes Sidelink-Subframe. Für die V2X-Sidelink-Kommunikation werden PSCCH, Physical Sidelink Control Channel, und PSSCH, Physical Sidelink Shared Channel, im gleichen Subframe übertragen. Die Sidelink-Kanäle SC1, SC2 sind beispielsweise der PSSCH.

Die physikalische Schichtverarbeitung von Transportkanälen im Sidelink unterscheidet sich von der Uplink-Übertragung in den folgenden Schritten: Scrambling: Für PSDCH, Physical Sidelink Discovery Channel, und PSCCH ist das Scrambling nicht spezifisch für die Netzwerkeinheit; Modulation: 64 QAM und 256 QAM wird für den Sidelink nicht unterstützt (QAM: Quadrature amplitude modulation). Der PSCCH gibt Sidelink-Ressourcen und andere Übertragungsparameter an, die von der jeweiligen Netzwerkeinheit UE1, UE2 für den PSSCH verwendet werden.

Für die PSDCH-, PSCCH- und PSSCH-Demodulation werden Referenzsignale ähnlich den Uplink-Demodulationsreferenzsignalen im 4-ten Symbol des Slots im normalen CP, Cyclic Prefix, und im dritten Symbol des Slots im erweiterten CP übertragen. Die Sidelink-Demodulationsreferenzsignal-Sequenzlänge entspricht der Größe (Anzahl der Subcarrier) der zugeordneten Ressource. Für die V2X-Sidelink-Kommunikation werden Referenzsignale in den 3. und 6. Symbolen des ersten Slots und in den 2. und 5. Symbolen des zweiten Slots im CP übertragen. Für PSDCH und PSCCH werden Referenzsignale basierend auf einer festen Basissequenz, zyklischem Shift und orthogonalem Cover Code erzeugt. Für die V2X-Sidelink-Kommunikation wird der zyklische Shift für PSCCH zufällig bei jeder Übertragung ausgewählt.

Für Messungen des jeweiligen Sidelink-Kanals SC1, SC2 stehen auf der Seite der Netzwerkeinheiten UE1, UE2 folgende Möglichkeiten zur Verfügung: Empfangsleistung des Sidelink-Referenzsignals (S-RSRP); Empfangsleistung des Sidelink-Discovery-Referenzsignals (SD-RSRP); Empfangsleistung des PSSCH-Referenzsignals (PSSCH-RSRP); Signalstärkeindikator für Sidelink-Referenzsignale (S-RSSI).

Der Adhoc-Kanal ADCH und das Adhoc-Drahtloskommunikationsnetzwerk VANET sind beispielsweise durch den IEEE-Standard "802.11p-2010 - IEEE Standard for Information technology-- Local and metropolitan area networks-Specific requirements-- Part 11: Wireless LAN Medium Access Control (MAC) and Physical Layer (PHY) Specifications Amendment 6: Wireless Access in Vehicular Environments" definiert, welcher durch Bezugnahme in diese Beschreibung aufgenommen ist. IEEE 802.11p ist ein Standard zur Erweiterung des WLAN-Standards IEEE 802.11. Die Zielrichtung von IEEE 802.11p ist es, die WLAN-Technik in Personen-Kraftfahrzeugen zu etablieren und eine zuverlässige Schnittstelle für Anwendungen intelligenter Verkehrssysteme (engl. Intelligent Transport Systems, ITS) zu schaffen. IEEE 802.11p ist auch Basis für Dedicated Short Range Communication (DSRC) im Frequenzband von 5,85 bis 5,925 GHz. Um Verwechslungen mit der europäischen DSRC Version zu vermeiden, wird vor allem in Europa eher der Begriff ITS-G5 anstatt DSRC verwendet.

Das Dokument "ETSI EN 302 663 V1.2.0 (2012-11)", welches durch Bezugnahme in diese Beschreibung aufgenommen ist, beschreibt beiden untersten Schichten der ITS-G5-Technologie (ITS G5: Intelligent Transport Systems operating in the 5 GHz frequency band), die physikalische Schicht und die Datenverbindungsschicht. Die Transceiver TA1 und TA3 realisieren beispielsweise diese beiden untersten Schichten und korrespondierende Funktionen nach "ETSI TS 102 687 V1.1.1 (2011-07)", um den Adhoc-Kanal ADCH zu verwenden. Für die Verwendung des Adhoc -Kanals ADCH stehen in Europa die folgenden nicht lizenzierten Frequenzbereiche zur Verfügung, welche Teil des nicht-lizenzierten Frequenzbereichs NLFB sind: 1) ITS-G5A für sicherheitsrelevante Anwendungen im Frequenzbereich von 5,875 GHz bis 5,905 GHz; 2) ITS-G5B für nicht-sicherheitsrelevante Anwendungen im Frequenzbereich von 5.855 GHz bis 5.875 GHz; und 3) ITS-G5D für den Betrieb von ITS-Anwendungen im Frequenzbereich 5,905 GHz bis 5.925 GHz. ITS-G5 ermöglicht eine Kommunikation zwischen den zwei Netzwerkeinheiten UE1 und UE2 außerhalb des Kontextes einer Basistation. ITS-G5 ermöglicht den sofortigen Austausch von Datenrahmen und vermeidet einen Management-Overhead, der bei der Einrichtung eines Netzwerks verwendet wird.

Das Dokument "ETSI TS 102 687 V1.1.1 (2011-07)", welches durch Bezugnahme in diese Beschreibung aufgenommen ist, beschreibt für ITS-G5 einen "Decentralized Congestion Control Mechanisms". Der Adhoc-Kanal ADCH dient unter anderem dem Austausch von Daten betreffend die Verkehrssicherheit und die Verkehrseffizienz. Die Transceiver TA1 und TA3 realisieren beispielsweise die Funktionen, wie sie im Dokument "ETSI TS 102 687 V1.1.1 (2011-07)" beschrieben sind. Die Anwendungen und Dienstleistungen im ITS-G5 beruhen auf dem kooperativen Verhalten der straßenseitigen Netzwerkeinheiten, die das Adhoc-Netzwerk VANET (VANET: vehicular ad hoc network) bilden. Das Adhoc-Netzwerk VANET ermöglicht zeitkritische Straßenverkehrsanwendungen, bei denen ein schneller Informationsaustausch notwendig ist, um den Fahrer und/oder das Fahrzeug rechtzeitig zu warnen und zu unterstützen. Um eine ordnungsgemäße Funktion des Adhoc-Netzwerks VANET zu gewährleisten, wird "Decentralized Congestion Control Mechanisms" (DCC) für den Adhoc-Kanal ADCH von ITS-G5 verwendet. DCC hat Funktionen, die sich auf mehreren Schichten der ITS-Architektur befinden. Die DCC-Mechanismen beruhen auf Wissen über den Kanal. Die Kanalzustandsinformation wird durch Kanal-Sondierung gewonnen. Kanalzustandsinformationen können durch die Methoden TPC (transmit power control), TRC (transmit rate control) und TDC (transmit datarate control) gewonnen werden. Die Methoden ermitteln die Kanalzustandsinformation in Abhängigkeit von Empfangssignalpegelschwellen oder Präambelinformationen von detektierten Paketen.

In der nachfolgenden Beschreibung wird auf den ersten Sidelink-Kanal SC1 im nicht lizenzierten Frequenzbereich NLFB Bezug genommen.

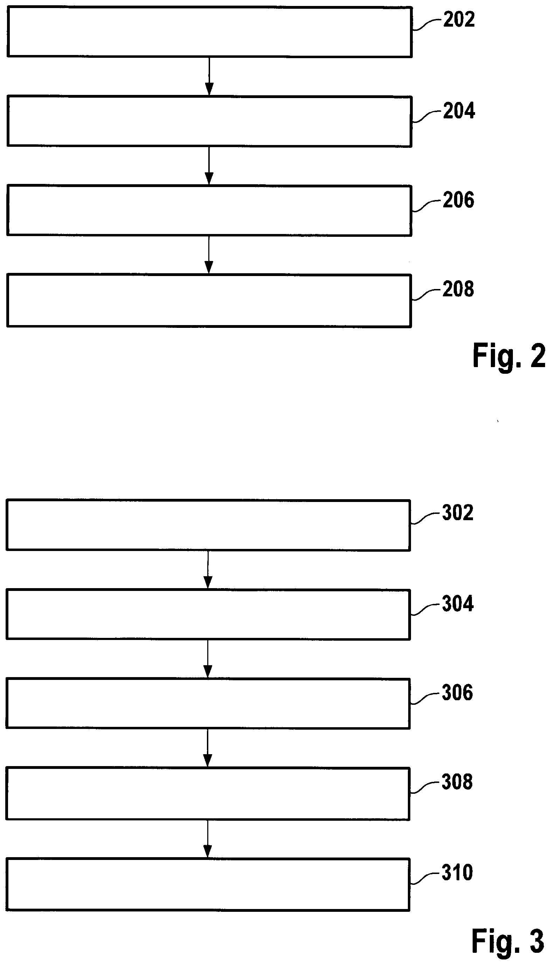

Figur 2 zeigt ein schematisches Ablaufdiagramm zum Betreiben der netzwerkinfrastrukturseitigen Netzwerkeinheit BS aus Figur 1. In einem Schritt 202 wird eine zell-bezogenen Belegungsinformation von Sidelink-Ressourcen eines Sidelink-Kanals in einem nicht lizenzierten Frequenzbereich prognostiziert, wobei die Belegungsinformation eine wahrscheinliche Belegung der Sidelink-Ressourcen durch Nicht-Sidelink-Kommunikation in dem nicht lizenzierten Frequenzbereich umfasst. Beispielsweise wird zur Ermittlung der zell-bezogenen Belegungsinformation eine Anzahl von Netzwerkeinheiten, die nicht dem zell-basierten Netzwerk angehören und auf dem gleichen nicht lizenzierten Frequenzbereich wie der Sidelink-Kanal senden, ermittelt und in Abhängigkeit von dieser Anzahl wird ein Anteil des von den vorgenannten Netzwerkeinheiten genutzten Frequenzspektrums ermittelt. Dieser Anteil entspricht dann der zell-bezogenen Belegungsinformation. In einem Schritt 204 wird eine Scheduling-Request-Nachricht für den Sidelink-Kanal auf einem Uplink-Kanal von einer straßenseitigen Netzwerkeinheit empfangen. In einem Schritt 206 wird eine Scheduling-Grant-Nachricht für die straßenseitige Netzwerkeinheit in Abhängigkeit von der prognostizierten zell-bezogenen Belegungsinformation ermittelt, wobei die Scheduling-Grant-Nachricht eine Zuweisung zumindest einer Sidelink-Ressource des Sidelink-Kanals zu der straßenseitigen Netzwerkeinheit umfasst. In einem Schritt 208 wird die Scheduling-Grant-Nachricht auf einem Downlink-Kanal an die straßenseitige Netzwerkeinheit versendet.

Figur 3 zeigt ein schematisches Ablaufdiagramm zum Betreiben der straßenseitigen Netzwerkeinheit UE1 aus Figur 1. In einem Schritt 302 werden eine Anzahl von Scheduling-Grant-Nachrichten für den Sidelink-Kanal auf dem Downlink-Kanal von der netzwerkinfrastrukturseitigen Netzwerkeinheit empfangen, wobei die Scheduling-Grant-Nachrichten jeweils eine Zuweisung zumindest einer Sidelink-Ressource des Sidelink-Kanals zu einer von in einer Zelle befindlichen straßenseitigen Netzwerkeinheiten umfassen. In einem Schritt 304 wird eine Messung eines Sidelink-Kanals durchgeführt. Unter eine Messung des Sidelink-Kanals ist zu verstehen, dass die Netzwerkeinheit BS, UE1 oder UE2 die Empfangsleistung auf dem Sidelink-Kanals über der Zeit aufzeichnet. In einem Schritt 306 wird eine in der Vergangenheit liegende Belegungsinformation in Abhängigkeit von der Messung des Sidelink-Kanals ermittelt. In einem Schritt 308 wird eine lokale Belegungsinformation in Abhängigkeit von der in der Vergangenheit liegenden Belegungsinformation und in Abhängigkeit von den Zuweisungen der Sidelink-Ressourcen des Sidelink-Kanals durch die Scheduling-Grant-Nachrichten ermittelt. In einem Schritt 310 wird die lokale Belegungsinformation des Sidelink-Kanals auf dem Uplink-Kanal an die netzwerkinfrastrukturseitige Netzwerkeinheit versendet.

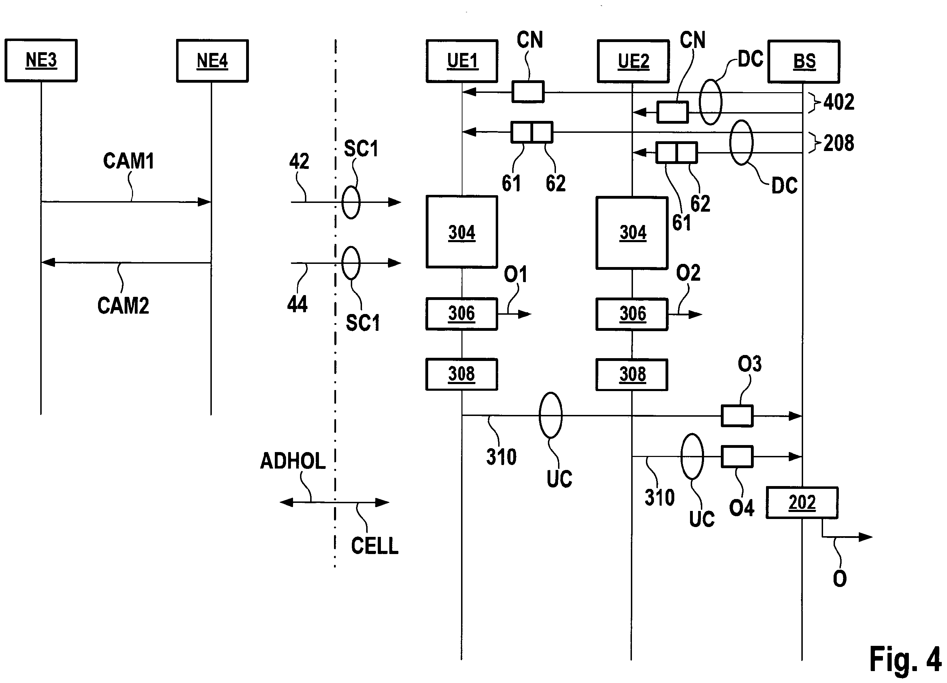

Figur 4 zeigt ein schematisches Sequenzdiagramm. In einem Schritt 402 wird eine Kontrollnachricht CN an die beiden Netzwerkeinheiten UE1 und UE2 über den Downlink-Kanal DC gesendet. Die Kontrollnachricht CN umfasst beispielsweise eine Reportrate zur Ermittlung und zum Versand der Belegungsinformationen O3 und O4 und/oder eine Zeitdauer zur Durchführung der Messung in dem Schritt 304. In dem Schritt 208 versendet die Netzwerkeinheit BS eine Anzahl von Scheduling-Grant-Nachrichten G1, G2 über den Downlink-Kanal DC an die Netzwerkeinheiten UE1 und UE2. Die Scheduling-Grant-Nachrichten G1, G2 können, müssen aber nicht den Netzwerkeinheit UE1 und UE2 zugeordnet sein. Die Netzwerkeinheiten UE1, UE2 führen in dem Schritt 304 eine jeweilige Messung des Sidelink-Kanals SC1 durch, welche beispielsweise zeitlich aufeinander folgende Messungen einer Empfangsleistung bei einer vorbestimmten Frequenz in dem nicht lizenzierten Frequenzbereich umfassen. Wie durch die Pfeile 42 und 44 angedeutet, kann eine Kommunikation zwischen den Netzwerkeinheiten NE 3 und NE 4 umfassend die Nachrichten CAM1, CAM2 den Sidelink-Kanal SC1 stören, was sich in den Messungen in den Schritten 304 niederschlägt.

Im Schritt 306 wird in Abhängigkeit von der durchgeführten Messung eine in der Vergangenheit liegende jeweilige Belegungsinformation O1, O2 ermittelt. Die Belegungsinformationen O1, O2 umfassen dabei die gemessenen Empfangsleistungen oberhalb eines Empfangsleistungs-Schwellwerts und somit sowohl Kommunikationen im ersten als auch im zweiten Drahtloskommunikationsnetzwerk CELL, VANET. Die Belegungsinformationen O1 und O2 unterscheiden sich, wenn sich die Netzwerkeinheit in UE1 und UE2 an unterschiedlichen Orten in der Zelle befinden und damit eine unterschiedliche Distanz zu den Netzwerkeinheiten NE3 und NE4 aufweisen.

Im Schritt 308 ermitteln die Netzwerkeinheit nur E1 und UE2 jeweilige lokale Belegungsinformationen O3 und O4 in Abhängigkeit von den jeweiligen Belegungsinformationen O1 und O2 und in Abhängigkeit von den Zuweisungen in den Scheduling-Grant-Nachrichten G1, G2. Die lokalen Belegungsinformationen O3 und O4 umfassen damit Belegungsinformationen, welche allein durch eine Nicht-Sidelink-Kommunikation verursacht ist, beispielsweise durch Nachrichten CAM1, CAM2, welche zwischen den Netzwerkeinheiten NE 3 und NE 4 ausgetauscht werden.

Im Schritt 310 versenden die Netzwerkeinheiten UE1 und UE2 die lokalen Belegungsinformationen O3 und O4 über den Uplink-Kanal UC an die Netzwerkeinheit BS. Der Netzwerkeinheit BS prognostiziert im Schritt 202 die zell-bezogene Belegungsinformation O.

Die zell-bezogene Belegungsinformation O sowie die anderen Belegungsinformationen in dieser Beschreibung sind beispielsweise eine zweidimensionale Belegungsmatrix. Diese zweidimensional Belegungsmatrix umfasst Bitwerte, welche eine Belegung oder eine Nicht-Belegung einer Zeit-Frequenz-Ressource auf dem Sidelink-Kanal SC1 anzeigen.

In dem zweiten Drahtlosnetzwerk VANET werden beispielsweise die Nachrichten CAM1, CAM2 verschickt, die von den Netzwerkeinheiten UE1, UE2 und BS in dem ersten Netzwerk CELL nicht lesbar sind, dennoch eine Kanalstörung auf dem Sidelink-Kanal SC1 verursachen können. Die Nachrichten CAM1, CAM2 sind beispielsweise Cooperative Awareness Messages, die zwischen den Netzwerkeinheiten NE3, NE4 in regelmäßigen Zeitabständen von beispielsweise 100 ms versendet werden.

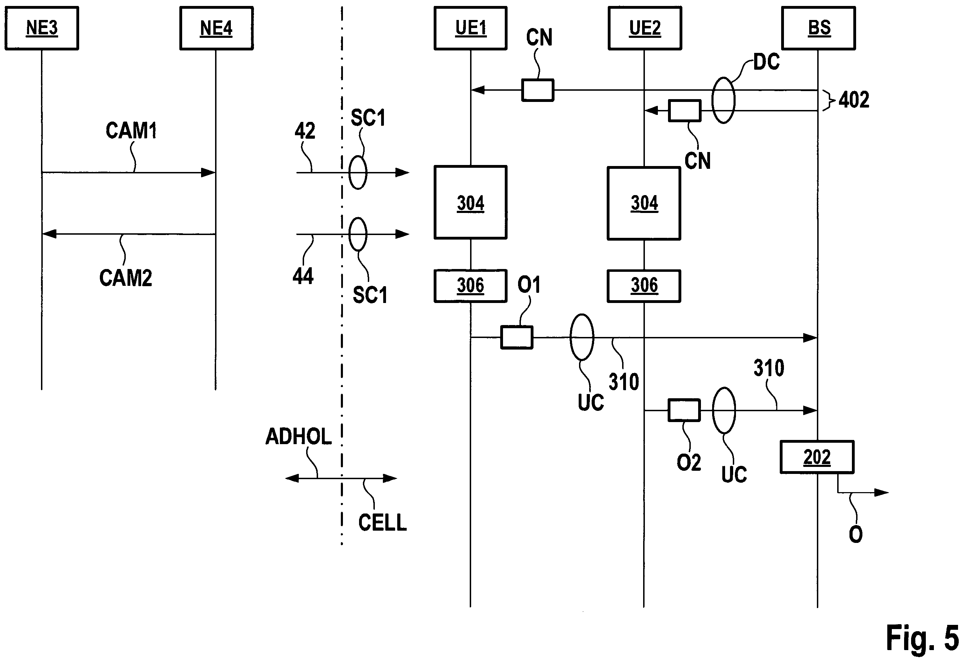

Figur 5 zeigt ein schematisches Sequenzdiagramm. Im Unterschied zu Figur 4 sind die Schritte 208, 308 nicht in der Figur gezeigt. Die Netzwerkeinheit UE1 und UE2 führen die Schritte 304 und 306 zur Ermittlung und zum Versand der jeweiligen lokalen Belegungsinformationen O1 und O2 durch. Im Schritt 202 erfolgt die Ermittlung der zell-bezogenen Belegungsinformation O in Abhängigkeit von den lokalen Belegungsinformation O1 und O2 und in Abhängigkeit von den Zuweisungen von Sidelink-Ressourcen des Sidelink-Kanals SC1, welche der Netzwerkeinheit BS bekannt sind. Die Belegungsinformationen O1 und O2 enthalten Informationen über Sidelink-Kommunikation als auch über Nicht-Sidelink-Kommunikation in demselben nicht-lizenzierten Frequenzband.

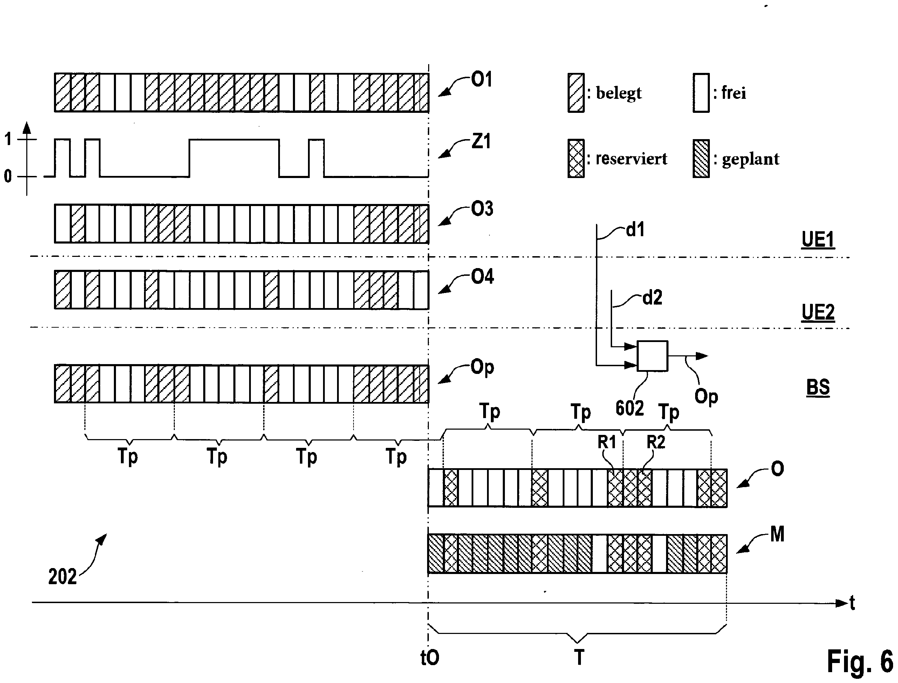

Figur 6 zeigt in Bezug zu Figur 4 eine schematische Darstellung zur Ermittlung der zell-bezogenen Belegungsinformation O. Die Belegungsinformation O1 ist aus der Messung des Sidelink-Kanals ermittelt worden. Aus den Scheduling-Grant-Nachrichten lassen sich Zuweisungen Z1 ermitteln, wobei 0 für nicht belegt und 1 für belegt steht. Die Zuweisungen Z1 umfassen folglich nur die durch die netzwerkinfrastrukturseitigen Netzwerkeinheit BS reservierten bzw. geschedulten Sidelink-Ressourcen. Durch eine Exklusiv-Oder Operation gemäß O3 = O1 XOR Z1 wird die lokale Belegungsinformation O3 ermitteln, welche nur noch die durch Netzwerkeinheiten des zweiten Drahtlosnetzwerks belegten Ressourcen enthält. Die zweite straßenseitige Netzwerkeinheit UE2 ermittelt eine eigene lokale Belegungsinformation O4 analog zur Ermittlung der Belegungsinformation O3.

Auf der Seite der netzwerkinfrastrukturseitigen Netzwerkeinheit BS werden die empfangenen lokalen Belegungsinformationen O3 und O4 zu einer in der Vergangenheit liegenden und zell-bezogenen Belegungsinformation Op zusammengefasst. Die zell-bezogene Belegungsinformation Op wird beispielsweise gemäß einer Oder-Funktion Op = O3 OR O4 ermittelt.

Beispielsweise durch Frequenzanalyse lässt sich ein regelmäßig wiederkehrendes Muster von durch Nicht--Sidelink-Kommunikation belegten Sidelink-Ressourcen feststellen. Vorteilhaft kann so beispielsweise die Eigenschaft von ITS-G5-Verkehr ausgenutzt werden, der ein periodisches Versenden von Nachrichten vorsieht. Im gezeigten Beispiel wurde ermittelt, dass in regelmäßigen Zeitabständen Tp der Sidelink-Kanal durch Nicht-Sidelink-Kommunikation belegt ist. Alternativ oder zusätzlich zur Frequenzanalyse können weitere Prädiktions-Algorithmen zur Mustererkennung verwendet werden.

Setzt man nun das vorgenannte wiederkehrende Muster in die Zukunft fort, so werden in der zell-bezogenen Belegungsinformation O Sidelink-Ressourcen zum Scheduling durch die netzwerkinfrastrukturseitige Netzwerkeinheit BS ausgenommen und für den Nicht-Sidelink-Verkehr reserviert. Zusätzlich zu diesen reservierten Ressourcen werden weitere Ressourcen R1 und R2 für den Nicht-Sidelink-Verkehr reserviert, die dann für nicht-periodischen wiederkehrenden Datenverkehr zur Verfügung stehen. Die in der zell-bezogenen Belegungsinformation O freien Sidelink-Ressourcen können gemäß dem gezeigten Muster M durch die netzwerkinfrastrukturseitige Netzwerkeinheit BS gescheduled werden. Die geschedulten Sidelink-Ressourcen werden den straßenseitigen Netzwerkeinheiten UE1, UE2 mitgeteilt.

Die zell-bezogene Belegungsinformation O ist für eine Zeitdauer T gültig. Die Zeitdauer T wird in Abhängigkeit von einer gemittelten Geschwindigkeit, mit welcher die Netzwerkeinheiten UE1 und UE2 sich fortbewegen, ermittelt. Diese gemittelte Geschwindigkeit kann beispielsweise abhängig vom Aufstellungsort der Antenne der netzwerkinfrastrukturseitigen Netzwerkeinheit BS gewählt werden. So kann die Zeitdauer T größer gewählt werden, wenn sich die Antenne in einem Stadtgebiet befindet, in dem sich die Netzwerkeinheit UE1, UE2 mit einer kleineren Geschwindigkeit bewegen als im Bereich einer Autobahn. Zusätzlich kann eine Variation dieser mittleren Geschwindigkeit je nach Tageszeit erfolgen. Ein weiteres Beispiel umfasst die Schätzung der Geschwindigkeit der einzelnen straßenseitigen Netzwerkeinheit UE1, UE2 durch die infrastrukturseitige Netzwerkeinheit BS. Des Weiteren können die straßenseitigen Netzwerkeinheiten UE1, UE2 ihre Geschwindigkeit an die infrastrukturseitige Netzwerkeinheit BS direkt übermitteln. Die Zeitdauer T wird zusätzlich oder alternativ in Abhängigkeit von Messungen zumindest eines der Sidelink-Kanäle SC1, SC2 und damit in Abhängigkeit von Kanalzustandsinformationen adaptiert.

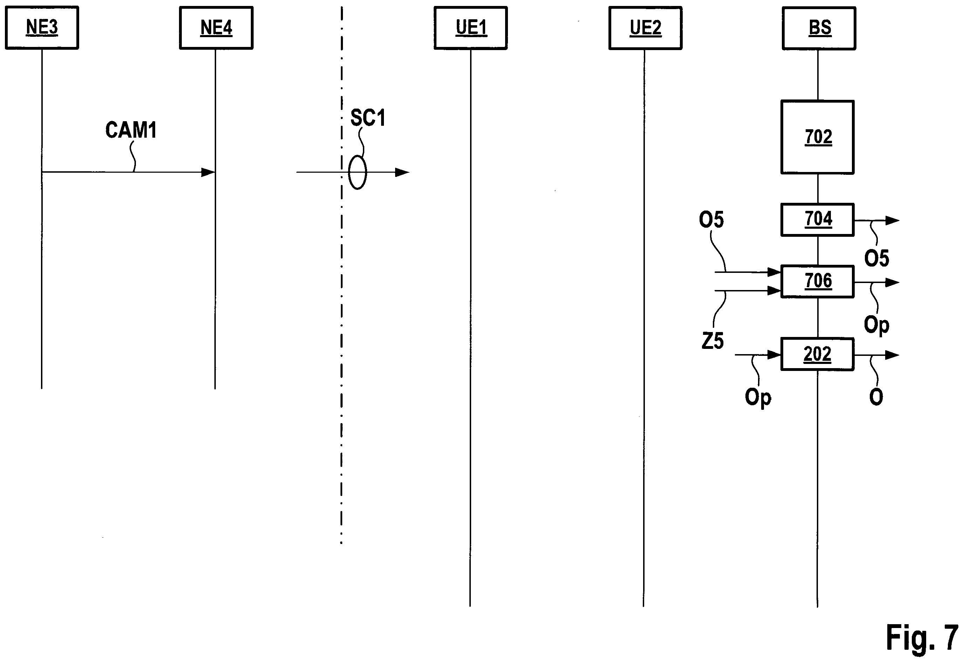

Figur 7 zeigt ein schematisches Sequenzdiagramm. In einem Schritt 702 wird eine Messung des Sidelink-Kanals SC1 durch die netzwerkinfrastrukturseitige Netzwerkeinheit BS durchgeführt. In einem Schritt 704 wird eine erste in der Vergangenheit liegenden Belegungsinformation O5 in Abhängigkeit von der Messung des Sidelink-Kanals SC1 ermittelt. In einem Schritt 706 wird die zweite in der Vergangenheit liegende Belegungsinformation Op in Abhängigkeit von der ersten Belegungsinformation O5 und in Abhängigkeit von von der Netzwerkeinheit BS ermittelten Zuweisungen Z5 von Sidelink-Ressourcen des Sidelink-Kanals SC1 zu straßenseitigen Netzwerkeinheiten UE1, UE2 ermittelt. In dem Schritt 202 wird die zell-bezogenen Belegungsinformation O des Sidelink-Kanals SC1 in Abhängigkeit von der zweiten Belegungsinformation Op vorausberechnet. Durch dieses Verfahren wird Nicht-Sidelink-Netzwerkverkehr, beispielsweise in Form der Nachricht CAM1, welcher in messbarer Nähe der netzwerkinfrastrukturseitigen Netzwerkeinheit BS auftritt, beim Scheduling in einem nachfolgenden Schritt berücksichtigt werden. Insbesondere bei kleinen Zellen, beispielsweise Femto-, Pico- oder Mikrozellen, bietet dieses Verfahren einen Vorteil, da potentiell alle straßenseitigen Netzwerkeinheiten UE1, UE2, NE3 und NE4 sich innerhalb der Zellabdeckung befinden.

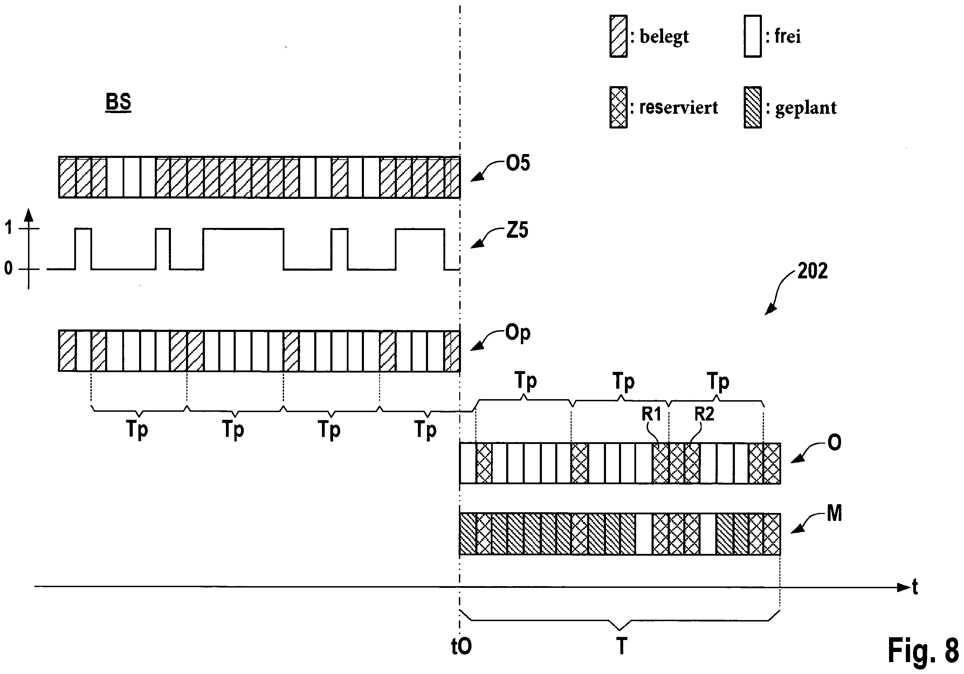

Figur 8 zeigt eine schematische Darstellung zur Ermittlung der zell-bezogenen Belegungsinformation O und in Ergänzung zu Figur 7 den Schritt 202. Aus der Kanalmessung ergibt sich eine Belegungsinformation O5, welche mit Zuweisungen Z5, welche aus den Zuweisungen des Schedulings der Sidelink-Ressourcen der Netzwerkeinheit BS bekannt ist, verglichen wird. Die in der Vergangenheit liegende Belegungsinformation Op wird gemäß einer Operation Op = O5 XOR Z5 ermittelt. Für die weiteren Schritte wird auf die Ausführungen zu Figur 6 verwiesen.

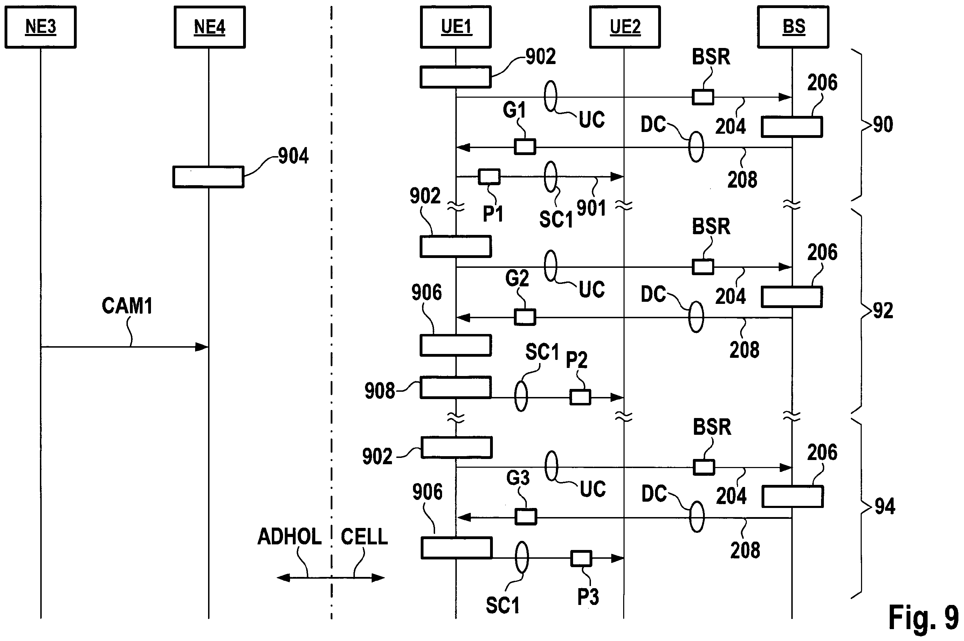

Figur 9 zeigt ein schematisches Sequenzdiagramm. Es sind drei Abläufe 90, 92 und 94 gezeigt. Zunächst wird der Ablauf 90 erläutert. In einem Schritt 902 ermittelt die erste straßenseitige Netzwerkeinheit UE1 Daten P1 zum Versand an die zweite straßenseitige Netzwerkeinheit UE2. Hierzu versendet die Netzwerkeinheit UE1 eine Scheduling-Request-Nachricht BSR, beispielsweise einen Buffer Status Report, an die Netzwerkeinheit BS, welche diese im Schritt 204 empfängt. Die Scheduling-Request-Nachricht BSR umfasst beispielsweise einen Quality-of-Service-Bedarf, den vorgenannten Buffer Status Report und/oder eine geplante Nachrichtenrate der straßenseitigen Netzwerkeinheit. Im Schritt 206 ermittelt die Netzwerkeinheit BS eine erste Scheduling-Grant-Nachricht G1 und versendet diese im Schritt 208 auf dem Downlink-Kanal DC an die erste Netzwerkeinheit UE1. Die Netzwerkeinheit UE1 prüft nicht, ob der Sidelink-Kanal SC1 frei ist, sondern sendet die Daten P1 in einem Schritt 901 an die Netzwerkeinheit UE2 über den Sidelink-Kanal SC1 in den mittels der Scheduling-Grant-Nachricht G1 zugewiesenen Sidelink-Ressourcen auf dem Sidelink-Kanal SC1. Sollte zum gleichen Zeitpunkt des Versendens der Daten P1 die Netzwerkeinheit NE3 Daten versenden wollen, so prüft diese in einem Schritt 904, ob der zugehörige Kanal frei ist. Da dies vorliegend nicht der Fall ist, versendet die Netzwerkeinheit NE3 keine Daten, sondern wartet eine sogenannte Backoff-Time vor einem erneuten Sendeversuch ab.

Gemäß dem Ablauf 92 werden in dem Schritt 902 Daten P2 zum Versand an die Netzwerkeinheit UE2 ermittelt. Zu den Schritten 204, 206 und 208 wird auf den Ablauf 90 verwiesen. Nach Erhalt einer im Schritt 206 ermittelten Scheduling-Grant-Nachricht G2 hört die Netzwerkeinheit UE1 in einem Schritt 906 den Sidelink-Kanal SC1 ab und stellt fest, dass dieser potentiell durch eine Kommunikation in dem zweiten Drahtlosnetzwerk VANET, vorliegend einem Versand der Nachricht CAM1, belegt ist. In einem Schritt 908 stellt die Netzwerkeinheit UE1 fest, dass der Sidelink-Kanal SC1 frei ist, was bedeutet, dass der Versand der Nachricht CAM1 beendet ist, und übermittelt umgehend die Daten P2 an die Netzwerkeinheit UE2 unter Nutzung der durch die Scheduling-Grant-Nachricht G2 zugewiesenen Sidelink-Ressourcen des Sidelink-Kanals SC1. Voraussetzung hierfür ist, dass die Scheduling-Grant-Nachricht G2 der Netzwerkeinheit UE1 Sidelink-Ressourcen auf dem Sidelink-Kanal SC1 zur Verfügung stellt, welche ausreichen, um die zum einen die Wartezeit bis zum Versenden der Daten P2 zu überbrücken und um zum anderen den Versand der Daten P2 sicherzustellen. Das bedeutet es müssen mehr Sidelink-Ressourcen durch die Netzwerkeinheit BS zugewiesen werden als für den Versand von Daten P2 ausgehend von der Netzwerkeinheit UE1 nötig sind.

Gemäß dem Ablauf 94 werden im Schritt 902 Daten P3 ermittelt. Zu den Schritten 204, 206 und 208 wird auf die vorangehende Beschreibung verwiesen. Eine im Schritt 206 ermittelte und von der ersten Netzwerkeinheit UE1 empfangene Scheduling-Grant-Nachricht G3 umfasst der Netzwerkeinheit UE1 zugeteilte Sidelink-Ressourcen. Im Schritt 910 prüft die erste Netzwerkeinheit UE1, ob der Sidelink-Kanal SC1 frei ist. Ist dies der Fall, sendet die Netzwerkeinheit UE1 die Daten P3 umgehend an die Netzwerkeinheit UE2 über den Sidelink-Kanal SC1 unter Verwendung der zugewiesenen Sidelink-Ressourcen. Sollten mehr Sidelink-Ressourcen zugewiesen worden sein, als zur Übertragung der Daten P3 notwendig sind, so stehen diese übrigen Sidelink-Ressourcen einer Datenübertragung im zweiten Drahtlosnetzwerk VANET zur Verfügung. Die Abläufe 92 und 94 entsprechen einem Listen-Before-Talk-Verfahren.

## Patentansprüche

1. Ein Verfahren zum Betreiben einer netzwerkinfrastrukturseitigen Netzwerkeinheit (BS) eines zell-basierten Drahtloskommunikationsnetzwerks (CELL), das Verfahren umfassend:
- Ermitteln einer Gültigkeitsdauer (T) für eine zell-bezogenen Belegungsinformation (O) in Abhängigkeit von einer vorab bestimmten oder ermittelten mittleren Bewegungsgeschwindigkeit der in der Zelle (C) befindlichen straßenseitigen Netzwerkeinheiten (UE1, UE2);
- Prognostizieren (202) der für die Gültigkeitszeitdauer (T) gültigen, zell-bezogenen Belegungsinformation (O) von Sidelink-Ressourcen eines Sidelink-Kanals (SC1) in einem nicht lizenzierten Frequenzbereich, wobei die Belegungsinformation (O) eine wahrscheinliche Belegung der Sidelink-Ressourcen durch Nicht-Sidelink-Kommunikation in dem nicht lizenzierten Frequenzbereich umfasst;
- Empfangen (204) einer Scheduling-Request-Nachricht (BSR) für den Sidelink-Kanal (SC1) auf einem Uplink-Kanal (UC) von einer straßenseitigen Netzwerkeinheit (UE1);
- Ermitteln (206) einer Scheduling-Grant-Nachricht (G1; G2; G3) für die straßenseitige Netzwerkeinheit (UE1) in Abhängigkeit von der gültigen prognostizierten zell-bezogenen Belegungsinformation (O), wobei die Scheduling-Grant-Nachricht (G1; G2; G3) eine Zuweisung zumindest einer Sidelink-Ressource (PRB, MCS, ...) des Sidelink-Kanals (SC1) zu der straßenseitigen Netzwerkeinheit (UE1) umfasst; und
- Versenden (208) der Scheduling-Grant-Nachricht (G1; G2; G3) auf einem Downlink-Kanal (DC) an die straßenseitige Netzwerkeinheit (UE1).

2. Das Verfahren nach dem Anspruch 1 umfassend:
- Empfangen (310) einer Anzahl von lokalen Belegungsinformationen (O1, O2; O3, O4) des Sidelink-Kanals (SC1) auf dem Uplink-Kanal (UL) von jeweiligen straßenseitigen Netzwerkeinheiten (UE1, UE2);
- Prognostizieren (202) der zell-bezogenen Belegungsinformation (O) in Abhängigkeit von den empfangenen lokalen Belegungsinformationen (O1, O2; O3, O4).

3. Das Verfahren nach dem Anspruch 2 umfassend:
- Gewichten (602) der jeweiligen lokalen Belegungsinformation (O3, O4) in Abhängigkeit von einer Entfernungs-Indikation (d1, d2), insbesondere in Abhängigkeit von einer von der jeweiligen straßenseitigen Netzwerkeinheit (UE1, UE2) empfangenen Signalstärke.

4. Das Verfahren nach einem der vorstehenden Ansprüche umfassend:
- Durchführen (702) einer Messung des Sidelink-Kanals (SC1);
- Ermitteln (704) einer ersten in der Vergangenheit liegenden Belegungsinformation (O5) in Abhängigkeit von der Messung des Sidelink-Kanals (SC1);
- Ermitteln (706) einer zweiten in der Vergangenheit liegenden Belegungsinformation (Op) in Abhängigkeit von der ersten Belegungsinformation (O5) und in Abhängigkeit von ermittelten Zuweisungen (Z5) von Sidelink-Ressourcen (PRB, MCS, ...) des Sidelink-Kanals (SC1) zu straßenseitigen Netzwerkeinheiten (UE1, UE2); und
- Vorausberechnen (202) der zell-bezogenen Belegungsinformation (O) des Sidelink-Kanals (SC1) in Abhängigkeit von der zweiten Belegungsinformation (Op).

5. Eine netzwerkinfrastrukturseitige Netzwerkeinheit (BS) eines zell-basierten Drahtloskommunikationsnetzwerks (CELL) umfassend:
- einen Prozessor (P_BS), welcher dazu eingerichtet ist, eine Gültigkeitsdauer (T) für eine zell-bezogenen Belegungsinformation (O) in Abhängigkeit von einer vorab bestimmten oder ermittelten mittleren Bewegungsgeschwindigkeit der in der Zelle (C) befindlichen straßenseitigen Netzwerkeinheiten (UE1, UE2) zu ermitteln, und die für die Gültigkeitszeitdauer (T) gültige, zell-bezogene Belegungsinformation (O) von Sidelink-Ressourcen eines Sidelink-Kanals (SC1) in einem nicht lizenzierten Frequenzbereich zu prognostizieren, wobei die Belegungsinformation (O) eine wahrscheinliche Belegung der Sidelink-Ressourcen durch Nicht-Sidelink-Kommunikation in dem nicht lizenzierten Frequenzbereich umfasst;
- eine Antenne (A_BS) und einen Transceiver (T_BS), welche dazu dazu eingerichtet sind, eine Scheduling-Request-Nachricht (BSR) für den Sidelink-Kanal (SC1) auf einem Uplink-Kanal (UC) von einer straßenseitigen Netzwerkeinheit (UE1) zu empfangen;
- wobei der Prozessor (P_BS) dazu eingerichtet ist, eine Scheduling-Grant-Nachricht (G1; G2; G3) für die straßenseitige Netzwerkeinheit (UE1) in Abhängigkeit von der gültigen prognostizierten zell-bezogenen Belegungsinformation (O) zu ermitteln, wobei die Scheduling-Grant-Nachricht (G1; G2; G3) eine Zuweisung zumindest einer Sidelink-Ressource (PRB, MCS, ...) des Sidelink-Kanals (SC1) zu der straßenseitigen Netzwerkeinheit (UE1) umfasst; und
- wobei die Antenne (A_BS) und der Transceiver (T_BS) dazu eingerichtet sind, die Scheduling-Grant-Nachricht (G1; G2; G3) auf einem Downlink-Kanal (DC) an die straßenseitige Netzwerkeinheit (UE1) zu versenden (208).

## Claims

1. Method for operating a network-infrastructure-side network unit (BS) of a cell-based wireless communication network (CELL), the method comprising:
- determining a validity period (T) for cell-related occupancy information (O) on the basis of a previously ascertained or determined average speed of movement of the roadside network units (UE1, UE2) that are in the cell (C);
- forecasting (202) the cell-related occupancy information (O), valid for the validity period (T), relating to sidelink resources of a sidelink channel (SC1) in an unlicensed frequency range, the occupancy information (O) comprising a probable occupancy of the sidelink resources by non-sidelink communication in the unlicensed frequency range;
- receiving (204) a scheduling request message (BSR) for the sidelink channel (SC1) from a roadside network unit (UE1) on an uplink channel (UC);
- determining (206) a scheduling grant message (G1; G2; G3) for the roadside network unit (UE1) on the basis of the valid forecast cell-related occupancy information (0), the scheduling grant message (G1; G2; G3) comprising an allocation of at least one sidelink resource (PRB, MCS, ...) of the sidelink channel (SC1) to the roadside network unit (UE1); and
- sending (208) the scheduling grant message (G1; G2; G3) to the roadside network unit (UE1) on a downlink channel (DC).

2. Method according to Claim 1, comprising:
- receiving (310) a number of local occupancy information items (O1, O2; O3, O4) relating to the sidelink channel (SC1) from respective roadside network units (UE1, UE2) on the uplink channel (UL);
- forecasting (202) the cell-related occupancy information (O) on the basis of the received local occupancy information items (O1, O2; O3, O4).

3. Method according to Claim 2, comprising:
- weighting (602) the respective local occupancy information item (O3, O4) on the basis of a distance indication (d1, d2), in particular on the basis of a signal strength received from the respective roadside network unit (UE1, UE2).

4. Method according to one of the preceding claims, comprising:
- performing (702) a measurement on the sidelink channel (SC1);
- determining (704) a first occupancy information item (O5) in the past on the basis of the measurement of the sidelink channel (SC1);
- determining (706) a second occupancy information item (Op) in the past on the basis of the first occupancy information item (O5) and on the basis of determined allocations (Z5) of sidelink resources (PRB, MCS, ...) of the sidelink channel (SC1) to roadside network units (UE1, UE2); and
- predicting (202) the cell-related occupancy information (O) relating to the sidelink channel (SC1) on the basis of the second occupancy information item (Op).

5. Network-infrastructure-side network unit (BS) of a cell-based wireless communication network (CELL), comprising:
- a processor (P_BS), designed to determine a validity period (T) for cell-related occupancy information (O) on the basis of a previously ascertained or determined average speed of movement of the roadside network units (UE1, UE2) that are in the cell (C), and to forecast the cell-related occupancy information (O), valid for the validity period (T), relating to sidelink resources of a sidelink channel (SC1) in an unlicensed frequency range, the occupancy information (O) comprising a probable occupancy of the sidelink resources by non-sidelink communication in the unlicensed frequency range;
- an antenna (A_BS) and a transceiver (T_BS), which are designed to receive a scheduling request message (BSR) for the sidelink channel (SC1) from a roadside network unit (UE1) on an uplink channel (UC);
- wherein the processor (P_BS) is designed to determine a scheduling grant message (G1; G2; G3) for the roadside network unit (UE1) on the basis of the valid forecast cell-related occupancy information (O), the scheduling grant message (G1; G2; G3) comprising an allocation of at least one sidelink resource (PRB, MCS, ...) of the sidelink channel (SC1) to the roadside network unit (UE1); and
- wherein the antenna (A_BS) and the transceiver (T_BS) are designed to send (208) the scheduling grant message (G1; G2; G3) to the roadside network unit (UE1) on a downlink channel (DC).

## Revendications

1. Procédé pour faire fonctionner une unité de réseau côté infrastructure de réseau (BS) d'un réseau de communication sans fil à base de cellules (CELL), le procédé comprenant :
- la détermination d'une durée de validité (T) pour une information d'occupation (O) relative à la cellule en fonction d'une vitesse de déplacement moyenne spécifiée ou déterminée au préalable des unités de réseau côté route (UE1, UE2) qui se trouvent dans la cellule (C) ;
- la prédiction (202) de l'information d'occupation (O) relative à la cellule, valable pendant la durée de validité (T), de ressources de liaison latérale d'un canal de liaison latérale (SC1) dans une plage de fréquences non soumise à licence, l'information d'occupation (O) comprenant une occupation probable des ressources de liaison latérale par une communication non de liaison latérale dans la plage de fréquences non soumise à licence ;
- la réception (204) d'un message de demande d'ordonnancement (BSR) pour le canal de liaison latérale (SC1) sur un canal de liaison montante (UC) de la part d'une unité de réseau côté route (UE1) ;
- la détermination (206) d'un message d'octroi d'ordonnancement (G1 ; G2 ; G3) pour l'unité de réseau côté route (UE1) en fonction de l'information d'occupation (O) relative à la cellule prédite valide, le message d'octroi d'ordonnancement (G1 ; G2 ; G3) comprenant une attribution d'au moins une ressource de liaison latérale (PRB, MCS, ...) du canal de liaison latérale (SC1) à l'unité de réseau côté route (UE1) ; et
- l'envoi (208) du message d'octroi d'ordonnancement (G1 ; G2 ; G3) sur un canal de liaison descendante (DC) à l'unité de réseau côté route (UE1).

2. Procédé selon la revendication 1 comprenant :
- la réception (310) d'un certain nombre d'informations d'occupation locales (O1, O2 ; O3, O4) du canal de liaison latérale (SC1) sur le canal de liaison montante (UL) de la part d'unités de réseau côté route (UE1, UE2) respectives ;
- la prédiction (202) de l'information d'occupation (O) relative à la cellule en fonction des informations d'occupation locales (O1, O2 ; O3, O4) reçues.

3. Procédé selon la revendication 2 comprenant :
- la pondération (602) des informations d'occupation locales (O3, O4) respectives en fonction d'une indication de distance (d1, d2), notamment en fonction d'une intensité de signal reçue par l'unité de réseau côté route (UE1, UE2) respective.

4. Procédé selon l'une des revendications précédentes comprenant :
- la réalisation (702) d'une mesure du canal de liaison latérale (SC1) ;
- la détermination (704) d'une première information d'occupation (O5) située dans le passé en fonction de la mesure du canal de liaison latérale (SC1) ;
- la détermination (706) d'une deuxième information d'occupation (Op) située dans le passé en fonction de la première information d'occupation (O5) et en fonction d'attributions (Z5) déterminées de ressources de liaison latérale (PRB, MCS, ...) du canal de liaison latérale (SC1) à des unités de réseau côté route (UE1, UE2) ; et
- le calcul à l'avance (202) de l'information d'occupation (O) relative à la cellule du canal de liaison latérale (SC1) en fonction de la deuxième information d'occupation (Op).

5. Unité de réseau côté infrastructure de réseau (BS) d'un réseau de communication sans fil à base de cellules (CELL) comprenant :;
- un processeur (P_BS), lequel est conçu pour déterminer une durée de validité (T) pour une information d'occupation (O) relative à la cellule en fonction d'une vitesse de déplacement moyenne spécifiée ou déterminée au préalable des unités de réseau (UE1, UE2) côté route qui se trouvent dans la cellule (C), et pour prédire l'information d'occupation (O) relative à la cellule, valable pendant la durée de validité (T), de ressources de liaison latérale d'un canal de liaison latérale (SC1) dans une plage de fréquences non soumise à licence, l'information d'occupation (O) comprenant une occupation probable des ressources de liaison latérale par une communication non de liaison latérale dans la plage de fréquences non soumise à licence ;
- une antenne (A_BS) et un émetteur-récepteur (T_BS), lesquels sont conçus pour recevoir un message de demande d'ordonnancement (BSR) pour le canal de liaison latérale (SC1) sur un canal de liaison montante (UC) de la part d'une unité de réseau côté route (UE1) ;
- le processeur (P_BS) étant conçu pour déterminer un message d'octroi d'ordonnancement (G1 ; G2 ; G3) pour l'unité de réseau côté route (UE1) en fonction de l'information d'occupation (O) relative à la cellule prédite valide, le message d'octroi d'ordonnancement (G1 ; G2 ; G3) comprenant une attribution d'au moins une ressource de liaison latérale (PRB, MCS, ...) du canal de liaison latérale (SC1) à l'unité de réseau côté route (UE1) ; et
- l'antenne (A_BS) et l'émetteur-récepteur (T_BS) étant conçus pour envoyer (208) le message d'octroi d'ordonnancement (G1 ; G2 ; G3) sur un canal de liaison descendante (DC) à l'unité de réseau côté route (UE1).
